# EUROPEAN PATENT SPECIFICATION

(11) **EP 0 821 710 B1**
(45) Date of publication and mention of the grant of the patent: **25.09.2002**
(21) Application number: 96914955.8
(22) Date of filing: 18.04.1996
(51) Int. Cl.: C08K 5/3492, C08L 73/00

(54) **POLYKETONE POLYMER COMPOSITION**
POLYKETONPOLYMER-ZUSAMMENSETZUNG
COMPOSITION POLYMERE A BASE DE POLYCETONE

(30) Priority: 19.04.1995 US 424845
(43) Date of publication of application: 04.02.1998
(73) Proprietor: SHELL INTERNATIONALE RESEARCH MAATSCHAPPIJ B.V., 2596 HR Den Haag (NL)
(72) Inventor: ASH, Carlton, Edwin, Sugar Land, TX 77479 (US); WATERS, Dixie, Green, Houston, TX 77055 (US)
(86) International application number: EP9601647
(87) International publication number: WO96033237

(56) References cited:
- EP-A- 0 444 323
- EP-A- 0 654 469
- GB-A- 2 297 091

## Description

This invention relates to polyketone polymer compositions. More particularly, this invention relates to polyketone polymer compositions containing a stabilizer acting against degradation by UV light.

Polymers of carbon monoxide and olefins generally referred to as polyketones or polyketone polymers are well known in the art. The class of linear alternating polymers of carbon monoxide and at least one ethylenically unsaturated compound are of particular interest among polyketone polymers. This class of polymers is disclosed in numerous patent documents, exemplified by US-A-4880865 and US-A-4818811.

The properties of polyketone polymers make them suitable for many applications. However, as is the case with most polymers, they can exhibit a deterioration of physical properties upon exposure to ultraviolet (UV) light. In polyketones, such degradation can result in a loss of physical properties such as ductility, strength and toughness.

It is desirable to prevent or inhibit the deterioration of polymer properties by stabilizing the polymer toward the adverse effects of UV radiation.
There are a number of commercially available UV stabilizers which can be employed with varied levels of effectiveness in various combinations. Such stabilizers include radical inhibitors such as hindered amine light stabilizers (HALS) and hindered phenols, excited state quenchers, peroxide decomposers, metal deactivators and UV absorbing additives. In many cases, ultraviolet stabilization is accomplished through a combination of such stabilizers.

For polyketone polymers, previously explored stabilization regimens include the approach proposed in US-A-4954548. In that case, the use of a combination of carbon black and a diphenylamine stabilizer was preferred. US-A-5149733 proposes the use of a combination of carbon black and a sterically hindered thiobisphenol stabilizer. Stabilization of polyketone polymers with UV absorbing carbon black, however, suffers from disadvantages which include a fixed part colour. The high loadings required can also adversely affect polymer physical properties and melt processing stability can also be reduced. It is, therefore, desirable to seek alternative or new materials to more efficiently stabilize polyketone polymers.

Non-pigmenting UV absorbing additives are known in the art. These additives protect polymers by absorbing harmful UV energy while containing functional groups which efficiently dissipate the energy in the form of heat. US-A-5019614 proposes the use of UV absorbers such as 2-hydroxybenzophenones and aniline-substituted triazines as stabilizers for polyketone polymers.

EP-A 0 654 469 describes that triazines containing two alkoxyphenyl substituents are used for stabilising a variety of polymers including polyketone copolymers. This citation do not refer to a linear alternating copolymer of CO and ethen.

During further development work using polyketone polymer compositions containing UV absorbing additives melt processing techniques, such as extrusion and injection moulding, were applied in order to process the compositions into articles of manufacture. Unfortunately, it was experienced that during the melt processing some degradation of the polyketones occurred so that, depending on the circumstances, there was a loss of mechanical properties such as ductility and toughness. Therefore, it would be desirable to find UV absorbing additives which provide an improvement in the melt stability of the compositions.

Unexpectedly it has now been found that an improved melt stability of the polyketone polymer compositions can be achieved when as a UV stabilizer a 1,3,5-triazine,is used which possesses in its molecular structure a hydroxyaryl moiety which is directly connected with the triazine moiety, i.e. by no more than a chemical bond. In addition it has been found that these compositions possessed an improved level of UV stability and an improved colour performance. Furthermore, the stabilizers now proposed have a low level of volatility so that a loss of stabilizer by evaporation during melt processing, if any, will be minimised.

Accordingly, the present invention relates to a polymer composition comprising a polyketone polymer and intimately mixed therewith a stabilizing quantity of a 2-(hydroxyaryl)-1,3,5-triazine.

In addition, the invention relates to a process comprising intimately mixing a polyketone polymer with a stabilizing quantity of a 2-(hydroxyaryl)-1,3,5-triazine.

Polyketone polymer compositions with improved UV stability are useful in a range of engineering thermoplastic applications such as in automotive structural parts and members. However, nearly any polyketone polymer article which faces exposure to sunlight can obtain some benefit by UV stabilization. The materials useful in practising this invention include polyketone polymer and a substituted 1,3,5-triazine as defined hereinbefore. Other polymer additives well known in the art can also be used in conjunction with polyketone compositions thus prepared. For instance, fillers, extenders, lubricants, pigments, plasticizers and other polymeric materials can be added to the polyketone compositions being stabilized to improve or otherwise alter the properties of the compositions.

The polyketone polymers for use in this invention are typically linear alternating copolymers of carbon monoxide and at least one ethylenically unsaturated compound. Thus, the polyketone polymers are typically of a linear alternating structure which means that they typically contain one molecule of carbon monoxide for each molecule of the ethylenically unsaturated compound. Ethylenically unsaturated compounds comprise typically up to 20 carbon atoms and include compounds which consist exclusively of carbon and hydrogen and compounds which in addition comprise hetero atoms, such as unsaturated esters, ethers and amides. Unsaturated hydrocarbons are preferred. Examples of suitable ethylenically monomers are aliphatic α-olefins, such as ethene, propene and butene-1, cyclic olefins such as cyclopentene, aromatic compounds, such as styrene and α-methylstyrene and vinyl esters, such as vinyl acetate and vinyl propionate. The preferred polyketone polymers are linear alternating polymers of carbon monoxide and ethene or linear alternating polymers of carbon monoxide, ethene and another ethylenically unsaturated compound of at least 3 carbon atoms, particularly an α-olefin such as propene or butene-1.

When the preferred polyketone polymers of carbon monoxide, ethene and another ethylenically unsaturated compound are employed there will be within the polymer typically at least 2 units incorporating a moiety of ethene for each unit incorporating a moiety of the other ethylenically unsaturated compound(s). Preferably, there will be from 10 units to 100 units incorporating a moiety of ethene for each unit incorporating a moiety of the other ethylenically unsaturated compound(s). The polymer chain of preferred polyketone polymers is therefore represented by the repeating formula

⁅CO(̵CH₂-CH₂)̵]ₓ⁅CO(̵G)⁆_{y}

where G is the moiety of the ethylenically unsaturated compound of at least 3 carbon atoms polymerized through the ethylenic unsaturation and the ratio of y:x is typically no more than about 0.5. When linear alternating polymers of carbon monoxide and ethene are employed in the compositions of the invention, there will be no second ethylenically unsaturated compound present and the copolymers are represented by the above formula wherein y is zero. When y is other than zero the ―CO(̵CH₂-H₂)̵ units and the -CO(̵G)̵ units are found randomly throughout the polymer chain, and preferred ratios of y:x are from 0.01 to 0.1. The precise nature of the end groups does not appear to influence the properties of the polymer to any considerable extent so that the polymers are fairly represented by the formula for the polymer chains as depicted above.

The polyketone polymers of number average molecular weight from 1000 to 200,000, particularly those of number average molecular weight from 20,000 to 90,000 as determined by gel permeation chromatography are of particular interest. The physical properties of the polymer will depend in part upon the molecular weight, whether the polymer is based on a single or on a plurality of ethylenically unsaturated compounds and on the nature and the proportion of the ethylenically unsaturated compounds. Typical melting points for the polymers are from 175 °C to 300 °C, more typically from 210 °C to 270 °C, as determined by differential scanning calorimetry. The polymers have typically a limiting viscosity number (LVN), measured in m-cresol at 60 °C in a standard capillary viscosity measuring device, from 0.5 dl/g to 10 dl/g, more typically from 0.8 dl/g to 4 dl/g.

Preferred methods for the production of the polyketone polymers are known from US-A-4808699 and US-A-4868282. US-A-4808699 teaches the production of polyketone polymers by contacting ethene and carbon monoxide in the presence of a catalyst comprising a Group VIII metal compound, an anion of a nonhydrohalogenic acid with a pKa less than 6 and a bidentate phosphorus, arsenic or antimony ligand. US-A-4868282 teaches the production of polyketone polymers by contacting carbon monoxide and ethene in the presence of one or more hydrocarbons having an ethylenically unsaturated group with a similar catalyst.

The polyketone polymers are stabilized against degradation caused by exposure to UV radiation by forming an intimate mixture with a substituted 1,3,5-triazine UV stabilizer as defined hereinbefore. Without wishing to be bound by theory, it is believed that the stabilizer according to this invention can absorb UV energy across a range of frequencies which includes the range between 280 and 380 nm and dissipates the UV energy such that the stabilizer is repeatedly able to absorb and dissipate UV energy in the form of heat. More particularly, UV absorption in the range 290-320 nm is considered most important to stabilizing polyketones towards the adverse effects of terrestrial sunlight.

The UV stabilizers of this invention are in particular comprised of substituted 1,3,5-triazine compounds having the general formula I: 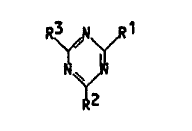 wherein R¹, R², and R³ may be the same or different and may be H or a C₁₋₂₀ aliphatic substituent or a substituted or unsubstituted aryl group, in particular a phenyl group, or any other material which can substitute on the triazine ring wherein the substituted triazine compound retains significant absorption characteristics at the 290-320 nm range, such substituents include for example halogens, nitrogen, oxygen, phosphorous, or sulphur provided that at least one of R¹, R² and R³ is a hydroxyaryl group, in particular a 2-hydroxyaryl group, preferably a 2-hydroxyphenyl group. Such materials are readily cognizable by reference to any number of sources reciting UV absorption characteristics such as Sadtler Research Laboratories UV Database. Thus, at least one of R¹, R² and R³ have preferably the structural formula: 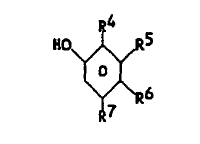 wherein R⁴, R⁵, R⁶ and R⁷ may be the same or different and may be H or any other substituent of which the total number of carbon or hetero atoms typically does not exceed 40 atoms. Such substituents may be, for example, alkyl groups or they may comprise an ester or amido group. In a preferred embodiment at least one of R⁴, R⁵, R⁶ and R⁷, in particular R⁵ represents an alkoxy group and the remainder of R⁴, R⁵, R⁶ and R⁷, if any, represents H. Preferably in formula I, R¹, R² and R³ are all phenyl groups. In particular, two of R¹, R² and R³ are alkyl substituted, more in particular 2,4-dialkyl substituted phenyl groups.

The most preferred UV stabilizer has the following structure:

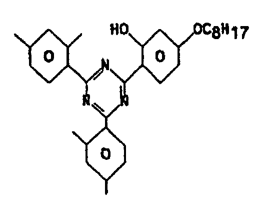

The functional groups substituted onto the phenyl groups or added or substituted onto R₁-R₄ can be used to adjust the overall physical and/or chemical properties of the stabilizer. For example, pendent organic or inorganic groups may be present as needed to modify such properties as the spectral absorption maxima, volatility, or compatibility. Although the present UV stabilizer may contain more than one UV absorbing-dissipating functional group, it is preferred that it contains only one such group. The present UV stabilizers' ability to protect the polyketone polymers exceeds those of the prior art and further extends the availability of UV stabilizers for polyketones. Moreover, this protection is attained with substances which are less volatile and which have no or less negative impact on melt processability. Low loads of these stabilizers can be used relative to prior art stabilizers thereby leading to better property retention in the polymer.

Broadly speaking, the process of the invention involves dispersing a stabilizing amount of UV stabilizer into polyketone polymer to form a mixture. A stabilizing amount of stabilizer is a quantity which is sufficient to prevent UV degradation of the polyketone. This quantity is generally between 0.1 and 10 wt% (based on the weight of the polyketone). Preferably, between 0.2 and 5 wt% is added. It is most preferred that between 0.4 and 2 wt% is added.

The stabilizer may be incorporated into the polyketone polymer at any stage of its processing but this is preferably done prior to subjecting the polymer to elevated temperature. Any of the conventional methods suitable for forming an intimate mixture of the polymer and additive may be used to form the mixture so long as the method results in a substantially uniform blend of the composition components. Such methods are in general melt processing methods and may include dry blending of the polymer and stabilizer in a finely divided form followed by melt extrusion of the mixture. Techniques such as solvent deposition may also be used as well as other methods known by those skilled in the art.

The stabilized polyketones formed in this manner are useful in the manufacture of fibers, sheets, films, laminates, containers, wire and cables of established utility which are produced by conventional methods such as melt spinning, extrusion, injection moulding and thermoforming. The compositions are particularly useful in applications where the finished product is likely to be exposed directly to ultraviolet light such as structural parts produced for external automotive applications.

The following nonlimiting examples and tables further illustrate the invention. In each example, weight percent is on the basis of the weight of polymer unless otherwise indicated.

### Examples 1-2 (Example 2 for comparison)

Samples of a cryoground powder of a linear alternating polymer of carbon monoxide, ethene and a minor amount of propene having a melting point of 220 °C and a limiting viscosity number of 1.8 dl/g were admixed with 1 %w of a UV stabilizer. In Example 1 the UV stabilizer tested was 2-(2-hydroxy-4-octyloxyphenyl)-4,6-bis(2,4-dimethylphenyl)-1,3,5-triazine (commercially available from Cytec Industries under the trademark CYASORB UV 1164) and in Example 2 the UV stabilizer tested was 2-hydroxy-4-octyloxybenzophenone (commercially available from Cytec Industries under the trademark CYASORB UV 531). The mixtures were each melt compounded into pellets on a 25 mm twin screw extruder applying a melt temperature of 255 °C. Test specimens were injection moulded in the form of 1.59 mm (1/16 inch) thick, type V, ASTM D638 tensile bars. These test specimens were then submitted to accelerated W aging. Accelerated aging was carried out by exposing the test specimens to a fluorescent light source in a weatherometer. A QUV accelerated weathering tester used for these studies was equipped with UV-340A fluorescent bulbs. The conditions of the accelerated aging test used continuous UV exposure without any water condensation periods. The temperature of a black panel during the tests was 50 °C. This accelerated aging protocol is referred to herein as QUV aging.

Photodegradation in polyketone polymers leads to a loss of ductility in polymer parts. The efficiency of stabilization can be measured by monitoring the relative retention of break strain.

The break strain of test specimens was measured using a commercial tensile tester and using a grip to grip distance of 25.4 mm (1.00 inches), a gauge length of 16.5 mm (0.65 inches), and a crosshead speed of 12.7 mm/min (0.5 in/min). Table 1 summarizes the performance of each of the samples and demonstrates the greater stabilization and maintenance of ductility offered by the stabilizers of this invention.

**Table 1.**

| Elongation at break (%) before and after exposure to QUV aging. | | | |
|---|---|---|---|
| Example | Exposure time (h) | | |
| | 0 | 144 | 500 |
| 1 | 276 | 113 | 157 |
| 2^{a)} | 279 | 37 | 38 |

| | | | |
|---|---|---|---|
| ^{a)} for comparison | | | |

The yellowness index of the pellets after extrusion was measured using a Gardner Colorgard System 2000 (Trademark) according to ASTM D-1925. A lower yellowness index is indicative for less discoloration of the polymer. The values found were 30.8 for the pellets of Example 1 and 33.2 for the pellets of Example 2.

Furthermore, samples of the pellets were compression moulded into 1-mm thick sheets by pressing at 250 °C for 0.5 minutes at 0.4 MPa and 1.5 minutes at 4 MPa pressure. Circular disks cut from the sheets were·subjected to dynamic rheology testing, i.e. measurement of dynamic shear moduli, at a temperature of 272 °C using an angular frequency of 1 rad/s and the samples being held between aluminium disks at a distance of 0.9 mm. The cross-over time is defined as the time lapsed during the measurement until the loss factor (i.e. the quotient of the loss modulus and the storage modulus) equals 1. A higher cross-over time is indicative for a better melt processing stability. In Example 1 the cross-over time was 27 minutes and in Example 2 the cross-over time was 18 minutes.

From the above it appears that the compositions according to this invention are superior in melt processing stability, UV ageing performance and colour formation when compared with compositions in accordance with the prior art.

## Claims

1. A polymer composition comprising a polyketone polymer and intimately mixed therewith 0.1-10 wt%, based on the weight of the polyketone polymer, of a 2-(hydroxyaryl)-1,3,5-triazine, provided that, if the triazine comprises two alkoxyphenyl substituents, the polyketone is not ethylene-vinylacetate-copolymer and its copolymer with carbon monoxide, and an alternating or statistic copolymer of polyalkylene with carbon monoxide.

2. A composition as claimed in claim 1 wherein said triazine has the following structure: 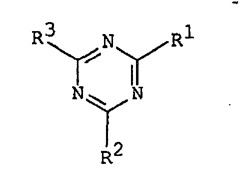 wherein R¹, R² and R³ are independently selected from the group consisting of H, C₁₋₂₀ aliphatic substituents, substituted and unsubstituted phenyl groups, provided that at least one of R¹, R² and R³ is a 2-hydroxyphenyl group.

3. A composition as claimed in claim 2 wherein R¹, R² and R³ are all phenyl groups.

4. A composition as claimed in any of claims 1-3 wherein said triazine has the structure:

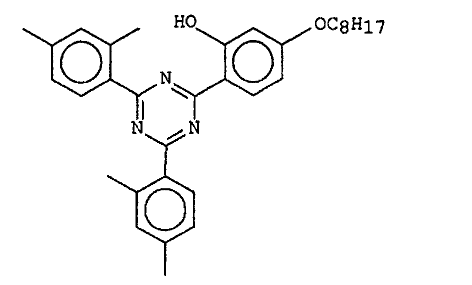

5. A composition as claimed in any of claims 1-4, wherein said triazine is present in a quantity of 0.4-2 wt%, based on the weight of the polyketone polymer.

6. A composition as claimed in any of claims 1-5 wherein the polyketone polymer is a linear alternating polymer of carbon monoxide with ethene and optionally another ethylenically unsaturated compound, in particular propene or butene-1.

7. A process comprising intimately mixing a polyketone polymer with 0.1-10 wt%, based on the weight of the polyketone polymer, of a 2-(hydroxyaryl)-1,3,5-triazine.

8. The use of a 2-(hydroxyaryl)-1,3,5-triazine for improving the UV stability of a polyketone, wherein the polyketone is a linear alternating copolymer of ethylene and optionally another ethylenically unsaturated compound.

## Patentansprüche

1. Polymerzusammensetzung, umfassend ein Polyketonpolymer und innig damit vermischt 0,1 bis 10 Gew.-%, bezogen auf das Gewicht des Polyketonpolymers, eines 2-(Hydroxyaryl)-1,3,5-triazins, mit der Maßgabe, daß dann, wenn das Triazin zwei Alkoxyphenylsubstituenten aufweist, das Polyketon nicht ein Ethylen-Vinylacetat-Copolymer und dessen Copolymer mit Kohlenmonoxid, und ein alternierendes oder statistisches Copolymer von Polyalkylen mit Kohlenmonoxid ist.

2. Zusammensetzung nach Anspruch 1, worin das Triazin die nachfolgende Struktur: 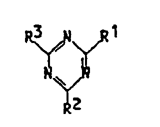 aufweist, worin R¹, R² und R³ unabhängig voneinander aus der aus Wasserstoff, C₁₋₂₀ aliphatischen Substituenten, substituierten und unsubstituierten Phenylgruppen bestehenden Gruppe ausgewählt sind, mit der Maßgabe, daß wenigstens einer der Reste R¹, R² und R³ eine 2-Hydroxyphenylgruppe ist.

3. Zusammensetzung nach Anspruch 2, worin alle Reste R¹, R² und R³ Phenylgruppen sind.

4. Zusammensetzung nach einem der Ansprüche 1 bis 3, worin das Triazin die Struktur: 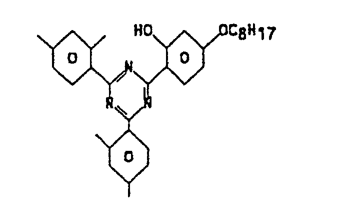 aufweist.

5. Zusammensetzung nach einem der Ansprüche 1 bis 4, worin das Triazin in einer Menge von 0,4 bis 2 Gew.-%, bezogen auf das Gewicht des Polyketonpolymers, vorliegt.

6. Zusammensetzung nach einem der Ansprüche 1 bis 5, worin das Polyketonpolymer ein lineares alternierendes Polymer aus Kohlenmonoxid und Ethen und gegebenenfalls einer weiteren ethylenisch ungesättigten Verbindung, insbesondere Propen oder Buten-1, ist.

7. Verfahren, umfassend ein inniges Vermischen eines Polyketonpolymers mit 0,1 bis 10 Gew.-%, bezogen auf das Gewicht des Polyketonpolymers, eines 2-(Hydroxyaryl)-1,3,5-triazins.

8. Verwendung eines 2-(Hydroxyaryl)-1,3,5-triazins zur Verbesserung der UV-Stabilität eines Polyketons, worin das Polyketon ein lineares alternierendes Copolymer mit Ethylen und gegebenenfalls einer weiteren ethylenisch ungesättigten Verbindung ist.

## Revendications

1. Composition de polymère comprenant un polymère de polycétone et intimement mélangés à celui-ci 0,1-10 % en poids, par rapport au poids du polymère de polycétone, d'une 2-(hydroxyaryl)-1,3,5-triazine, pour autant que, si la triazine comprend deux substituants alcoxyphényle, la polycétone ne soit pas un copolymère d'éthylène-acétate de vinyle et son copolymère avec du monoxyde de carbone, et un copolymère alterné ou statistique de polyalkylène avec du monoxyde de carbone.

2. Composition suivant la revendication 1, dans laquelle la triazine précitée a la structure suivante : 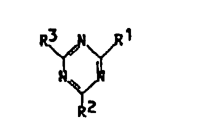 dans laquelle R¹, R² et R³ sont choisis indépendamment dans le groupe comprenant H, les substituants aliphatiques en C₁₋₂₀, les groupes phényle substitués et non substitués, pour autant qu'au moins un des R¹, R² et R³ soit un groupe 2-hydroxyphényle.

3. Composition suivant la revendication 2, dans laquelle R¹, R² et R³ sont tous des groupes phényle.

4. Composition suivant l'une quelconque des revendications 1 à 3, dans laquelle la triazine précitée a la structure :

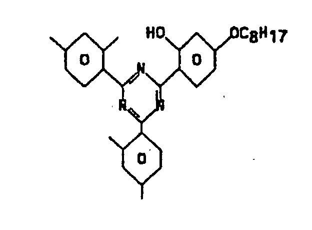

5. Composition suivant l'une quelconque des revendications 1 à 4, dans laquelle la triazine précitée est présente en une quantité de 0,4-2 % en poids, par rapport au poids du polymère de polycétone.

6. Composition suivant l'une quelconque des revendications 1 à 5, dans laquelle le polymère de polycétone est un polymère alterné linéaire de monoxyde de carbone avec de l'éthène et éventuellement un autre composé éthyléniquement insaturé, en particulier du propène ou du butène-1.

7. Procédé comprenant le mélange intime d'un polymère de polycétone avec 0,1-10 % en poids, par rapport au poids du polymère de polycétone, d'une 2-(hydroxyaryl)-1,3,5-triazine.

8. Utilisation d'une 2-(hydroxyaryl)-1,3,5-triazine pour améliorer la stabilité U.V. d'une polycétone, dans laquelle la polycétone est un copolymère alterné linéaire d'éthylène et éventuellement d'un autre composé éthyléniquement insaturé.
